# EUROPÄISCHE PATENTSCHRIFT

(11) **EP 1 134 130 B1**
(45) Veröffentlichungstag und Bekanntmachung des Hinweises auf die Patenterteilung: **24.08.2005**
(21) Anmeldenummer: 01102560.8
(22) Anmeldetag: 06.02.2001
(51) Int. Cl.: B60R 21/13

(54) **Überrollschutzsystem mit fahrzeugfester, angebrachter Kassette**
Roll bar device with a case fixed on the vehicle
Dispositif d'arceau avec cassette fixée sur le véhicule

(30) Priorität: 17.03.2000 DE 10013376
(43) Veröffentlichungstag der Anmeldung: 19.09.2001
(73) Patentinhaber: ISE Innomotive Systems Europe GmbH, 51702 Bergneustadt (DE)
(72) Erfinder: Nass, Michael, 51702 Bergneustadt (DE); Nowack, Reinhard, 57489 Drolshagen (DE); Schulte, Michael, 57462 Olpe (DE); Menne, Hans-Gerd, 51702 Bergneustadt (DE)
(74) Vertreter: Fuchs Mehler Weiss & Fritzsche

(56) Entgegenhaltungen:
- WO-A-98/00249
- DE-A- 4 314 538
- DE-A- 4 342 400

## Beschreibung

Die Erfindung bezieht sich auf ein Überrollschutzsystem mit einem im Gefahrenfall ausfahrbaren U-förmigen Überrollbügel, der in einer fahrzeugfest angebrachten Kassette aus- und einfahrbar geführt gehaltert ist.

Überrollschutzsysteme, wie sie insbesondere bei Cabriolets oder Sportwagen eingesetzt werden, weisen typischerweise einen geführten Überrollkörper, typischerweise einen Überrollbügel, auf, der im Normalzustand gegen die Vorspannkraft einer Antriebs-Druckfeder durch eine Haltevorrichtung in einer unteren Ruhelage gehalten wird, und im Überschlagfall sensorgesteuert unter Lösen der Haltevorrichtung in eine obere, schützende und dort mittels einer Rastklinke und eines Zahnelementes verriegelte Stellung bringbar ist. Die Haltevorrichtung besitzt zu diesem Zweck typischerweise ein am Überrollbügel befestigtes Halteglied, das in lösbarer mechanischer Wirkverbindung mit einem Auslöseglied an einem sensorgesteuerten Auslösesystem steht, das typischerweise durch einen Auslösemagneten, den sogenannten Crashmagneten oder durch ein pyrotechnisches Auslöseglied gebildet ist.

Für Überrollschutzsysteme der vorgenannten Art sind verschiedene Bauarten bekannt geworden. Eine typische Bauart, von der auch die Erfindung ausgeht, bezieht sich auf die sogenannte Kassettenbauweise, bei der in einem die Kassette bildenden Gehäuse, das jeweils einem Fahrzeugsitz individuell zugeordnet und fahrzeugfest befestigt ist, der Überrollbügel geführt und alle weiteren notwendigen Komponenten des Schutzsystems aufgenommen sind.

Eine solche Kassettenbauweise zeigen beispielsweise die DE 43 42 400 A1 und die gattungsbildende DE 43 14 538 C2 (= EP 0 729 867 A1).

Bei den bekannten Konstruktionen ist das die Kassette bildende Gehäuse typischerweise aus großflächigen Blechteilen zusammengesetzt und weist im Innern der Kassette angebrachte massive Führungskörper, vorzugsweise Strangpreßprofilteile auf. Dadurch ist die Herstellung der Kassette relativ teuer, verbunden mit einem relativ hohen Gewicht.

Der Erfindung liegt die Aufgabe zugrunde, das eingangs bezeichnete Überrollschutzsystem hinsichtlich der Kassette so auszubilden, daß diese relativ einfach und mit wenig Komponenten sowie mit relativ geringem Gewicht herzustellen ist.

Die Lösung dieser Aufgabe gelingt ausgehend von dem Überrollschutzsystem mit einem im Gefahrenfall ausfahrbaren U-förmigen Überrollbügel, der in einer fahrzeugfest angebrachten Kassette aus- und einfahrbar geführt gehaltert ist, gemäß der Erfindung durch einen Aufbau der Kassette aus zwei Blechschalen, einem großflächigen, hohen Kassettenvorderteil und einem niedrigeren Kassettenschließblech, die beide jeweils zwei Halbschalen zur Aufnahme von Stützrohren besitzen, die maßgenau entsprechend dem Abstand der beiden Schenkel des Überrollbügels jeweils in den gegenüberliegenden Halbschalen des Kassettenvorderteiles und des Kassettenschließbleches befestigt sind.

Durch die erfindungsgemäßen Maßnahmen ist die Kassette relativ einfach mit wenigen Bauteilen herzustellen und sie weist durch die Ausbildung aus relativ dünnen Blechteilen auch ein relativ geringes Gewicht auf.

Vorzugsweise ist gemäß einer Ausgestaltung der Erfindung die Länge der Stützrohre nach der Höhe des Kassettenschließbleches bestimmt. Dadurch ist ein geschlossener, kompakter Aufbau mit guter Kraftaufnahme gewährleistet. Prinzipiell können die Stützrohre auch kürzer oder länger sein.

Entsprechend einer weiteren Ausgestaltung ist zwischen den Stützrohren und den Halbschalen umlaufend ein Spiel ausgebildet, welches ermöglicht, die Stützrohre beim Zusammenbau der Kassette mit minimaler Toleranz zueinander zu positionieren.

Gemäß einer ersten Weiterbildung der Erfindung ist ein einfaches Zusammenfügen der Blechschalenteile mit den Stützrohren möglich, wenn sowohl das Kassettenvorderteil als auch das Kassettenschließblech an beiden Randseiten laschenartige Fortsätze und zwischen den Halbschalen jeweils mindestens eine aufeinander zugerichtete flächige Ausformung zur gegenseitigen flächigen Verbindung der beiden Kassetten-Blechschalen besitzen. Diese Verbindungen lassen sich durch relativ einfache Schweißvorgänge realisieren und erlauben somit eine wirtschaftliche Herstellung der Kassette.

Prinzipiell sind jedoch auch andere Maßnahmen zum Zusammenfügen der Blechschalen und der Stützrohre möglich.

Bei der vorbeschriebenen Weiterbildung sind vorzugsweise zwei alternative Konstruktionen denkbar. Die erste Konstruktion besteht darin, daß jeweils zwei beabstandete flächige Ausformungen vorgesehen sind, zwischen denen ein freier Raum für die Anordnung von Komponenten des Überrollschutzsystems ausgebildet ist. Diese Konstruktion empfiehlt sich, sofern ein genügend breiter Einbauraum für die Kassette zur Verfügung steht.

Die zweite alternative Konstruktion besteht darin, daß jeweils nur eine flächige Ausformung vorgesehen ist und beabstandet zu dieser unter Bildung eines freien Raumes dazwischen mindestens ein Verbindungs-Blechteil angebracht ist. Diese Konstruktion läßt ein reduziertes Baumaß zwischen beiden Stützrohren zu und empfiehlt sich daher für PKW mit einem nicht so breiten Einbauraum. Vorzugsweise ist bei dieser zweiten Konstruktion das Verbindungsblechteil ein winkelförmiges oder alternativ ein U-förmiges Blechteil, das einerseits mit einem Schenkel die entsprechende Bautiefe der Kassette vorgibt bei gleichzeitiger hoher Versteifung.

Um eine Ausrichtung der Schenkelrohre des Überrollbügels in Bezug auf die Stützrohre zu ermöglichen, ist das Überrollschutzsystem gemäß einer anderen Weiterbildung der Erfindung so ausgebildet, daß der U-förmige Überrollbügel hälftig zweigeteilt ist und die Verbindungsstelle zwischen beiden Bügelhälften so ausgebildet ist, daß beim Zusammenfügen der Bügelhälften, vorzugsweise durch Schweißen, eine gewünschte Ausrichtung der Schenkelrohre zueinander ermöglicht ist. Dabei kann die Anordnung so getroffen sein, daß entweder die Verbindung beider Bügelhälften als Muffe ausgebildet ist oder daß ein die Bügelhälften verbindendes Zwischenstück in Form eines Rohrabschnittes an der Verbindungsstelle vorgesehen ist.

Die Bewegungsbahn des Überrollbügels kann dabei gradlinig aber auch in bekannter Weise gekrümmt sein. Bei einer gekrümmten Bewegungsbahn ist die Anordnung so getroffen, daß am Ende der Stützrohre jeweils ein Führungsring zur spielfreien Aufnahme des Überrollbügels angebracht ist.

Anhand von in den Zeichnungen dargestellten Ausführungsbeispielen wird die Erfindung näher beschrieben.

Es zeigen:
- Figur 1: in einer Explosions-Darstellung die wesentlichen Bauteile der erfindungsgemäBen Blechkassette,
- Figur 2: die Blechkassette nach Figur 1 im zusammengebauten Zustand,
- Figur 3: eine Querschnitts-Darstellung der erfindungsgemäßen Blechkassette nach Figur 2 entlang einer Schnittlinie A-A mit einer ersten Ausführungsform der Verbindung der beiden die Kassette bildenden Blechschalen,
- Figur 4: eine Querschnitts-Darstellung analog Figur 3, jedoch mit einer zweiten Ausführungsform der Verbindung der beiden die Kassette bildenden Blechschalen,
- Figur 5: die Ausbildung der erfindungsgemäßen Kassette bei einer gekrümmten Bewegungsbahn des Überrollbügels,
- Figur 6: in einer Längsschnitt-Darstellung das Zusammenfügen der Bügelhälften eines mittig zweigeteilten Überollbügels mit einer Verbindungsmuffe, und
- Figur 7: eine Längsschnitt-Darstellung analog Figur 6 mit einem Rohr-Zwischenstück als Verbindungselement.

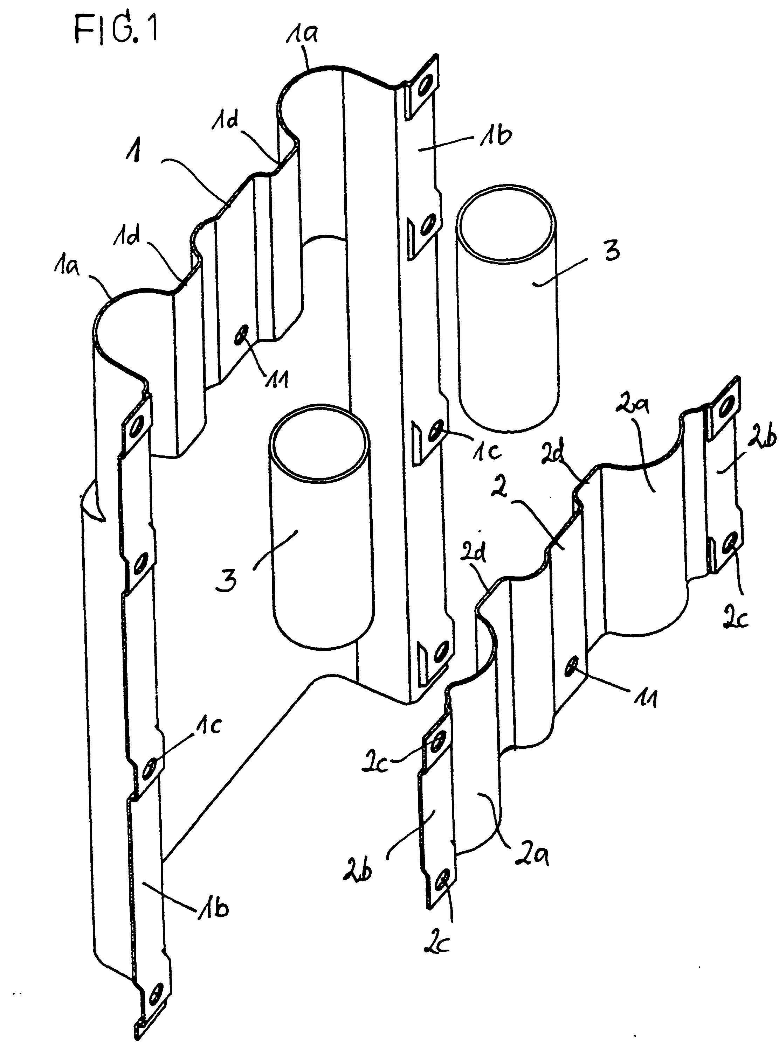

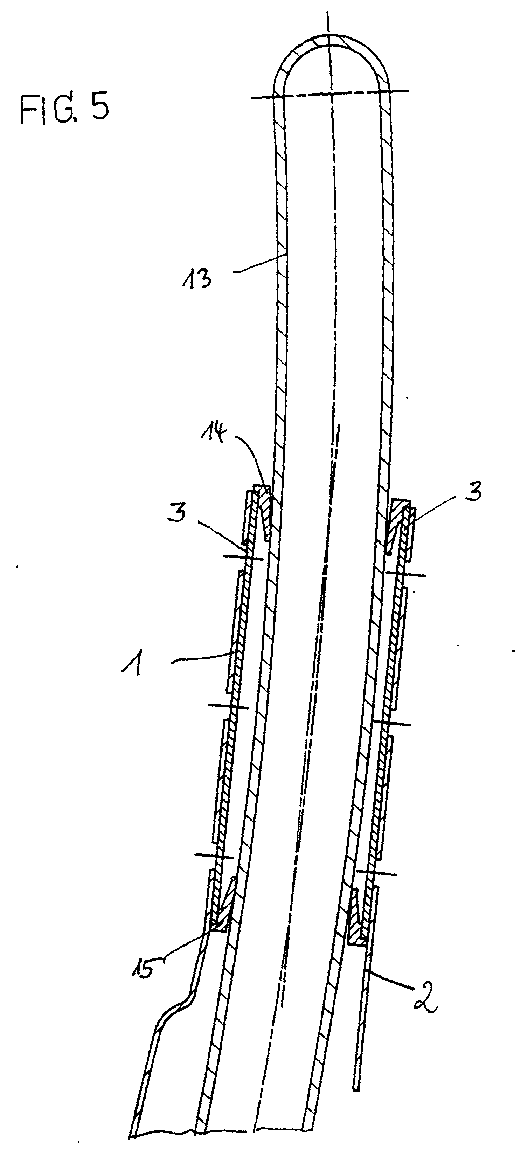

Die Figur 1 zeigt in einer Explosionsdarstellung die wesentlichen Bauteile der erfindungsgemäßen Blechschalen-Kassette. Diese besteht aus drei Hauptteilen, nämlich
- einem großflächigen U-förmigen Kassettenvorderteil 1 in Form einer Blechschale, welches den gesamten Bauraum für alle benötigten Komponenten des Überrollschutzsystems, wie Rastklinke der Verriegelung, Auslösesystem (Aktuator), Antriebs-Druckfedern etc., umfaßt
- einem schalenförmigen Kassettenschließblech 2, welches im Gegensatz zu dem schalenförmigen Kassettenvorderteil 1 eine wesentlich geringere Bauhöhe hat. Dieses Kassettenschließblech 2 dient dazu, die kraftaufnehmenden Komponenten, z.B. die Rastklinke, in einem Verbund mit dem Kassettenvorderteil 1 zu halten
- zwei Stützrohren 3 zum Haltern und Führen der Schenkel des Überrollbügels (Fig. 5 - 7), die zur Festigkeitsverbesserung zwischen dem Kassettenvorderteil 1 und dem Kassettenschließblech 2 maßgenau entsprechend dem Abstand der Schenkel des Überrollbügels eingebaut werden. Zu diesem Zweck besitzen sowohl das Kassettenvorderteil 1 als auch das Kassettenschließblech 2 schalenförmige Ausprägungen la bzw 2a zur Aufnahme der Stützrohre 2, wobei zum Ausgleich von Toleranzen die lichte Weite der Schalen etwas größer als der Durchmesser der Schenkel des Überrollbügels ist.

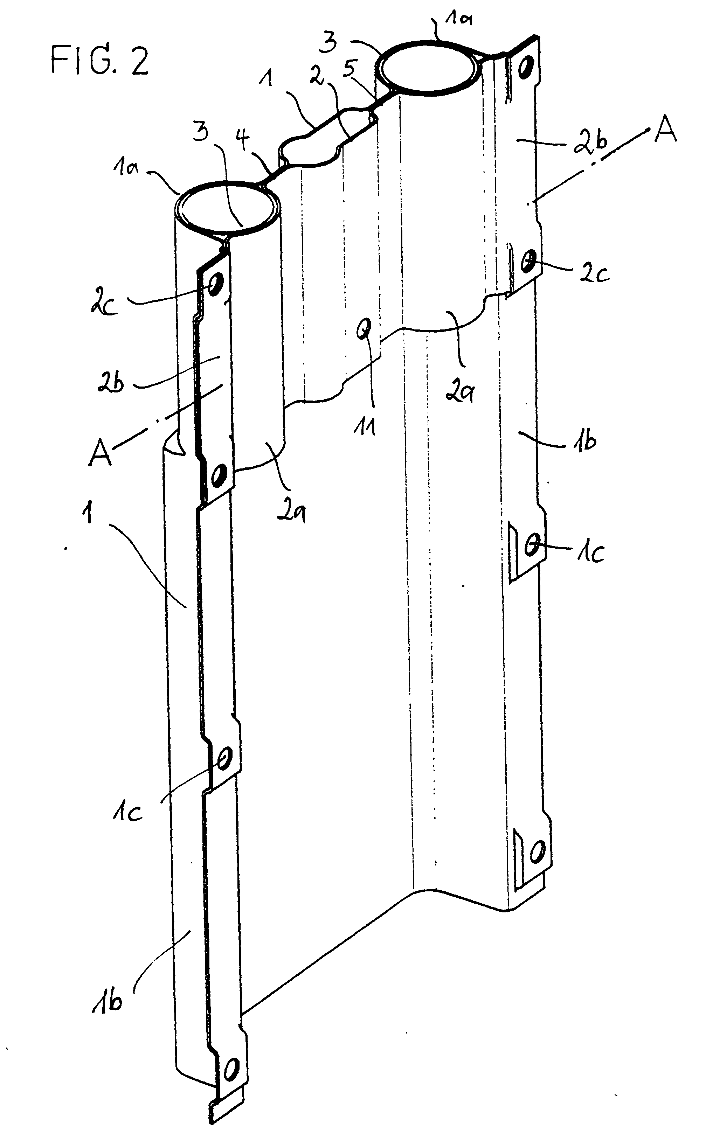

Die Figur 2 zeigt die Blechschalenkassette nach Fig. 1 im zusammengebauten Zustand. Zu deren fahrzeugfesten Befestigung am Fahrzeugsitz oder der Fahrzeugrückwand weist das U-förmige Kassettenvorderteil 1 an den U-Schenkeln Verbindungslaschen 1b mit entsprechenden Befestigungsbohrungen 1c auf, denen im oberen Teil entsprechende Befestigungslaschen 2b bzw. Befestigungsbohrungen 2c gegenüber stehen.

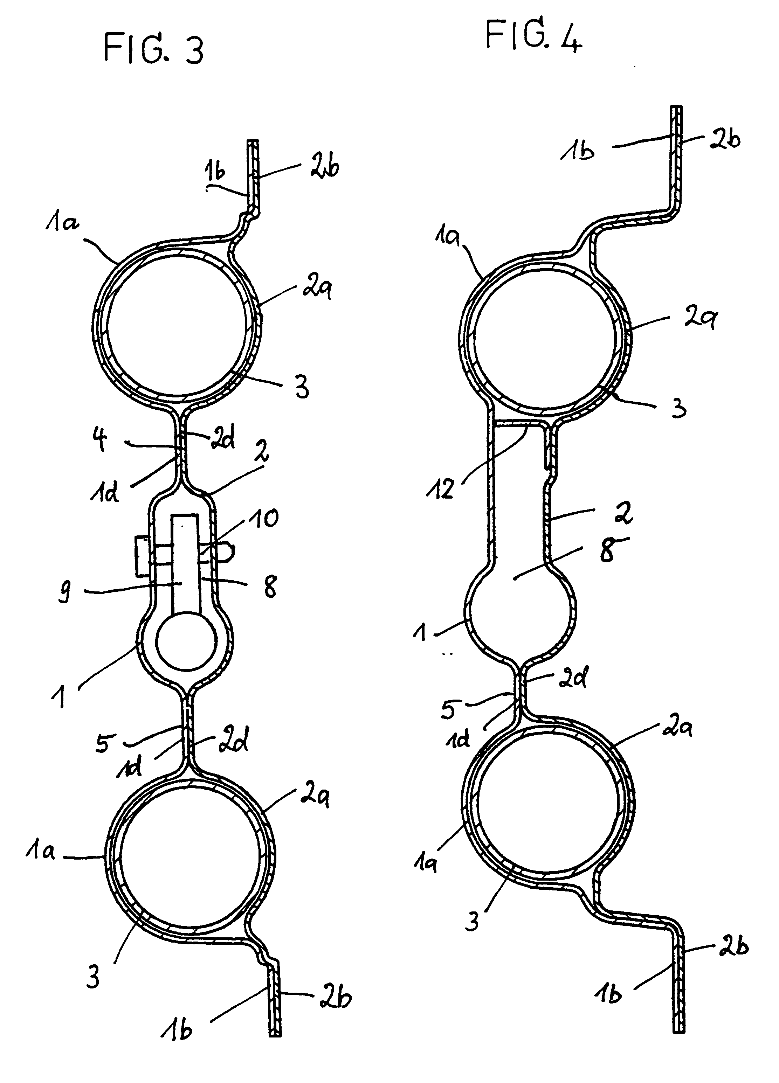

Anhand von zwei in den Figuren 3 und 4 dargestellten Querschnitt-Ansichten, genommen entlang der Schnittlinie A-A in Fig. 2, werden zwei alternative Ausgestaltungen der Erfindung beschrieben.

Bei ausreichendem seitlichen Bauraum wird gemäß Figur 3 das Kassettenvorderteil 1 an zwei Stellen 4 und 5 mittels flächiger Ausformungen 1 d, 2 d relativ flächig überlappend direkt mit dem Kassettenschließfäch 2 verbunden. In dem Raum 8 zwischen den Verbindungsstellen 4, 5 befindet sich die Verriegelungsanordnung 9 für die Verriegelung des ausgefahrenen Überrollbügels gegen eine erzwungene Einfahrbewegung, die typischerweise aus einem Zahnelement, z.B. in Form eines Rastdornes, und einer Rastklinke besteht, die mittels eines Bolzens 10, der in Bohrungen 11 in den Kassettenteilen 1 und 2 aufgenommen ist (Fig. 1, 2), schwenkbar in den Kassettenteilen 1, 2 gehaltert ist.

Bei reduziertem Breiten-Baumaß, d.h. geringerem Schenkelabstand, erfolgt gemäß Figur 4 anstelle der flächigen direkten Verbindung 4 zwischen beiden Kassettenteilen 1, 2 die Verbindung über ein abgewinkeltes Verbindungsblech 12, so daß auch ein langgestreckter großer Freiraum 8 für die Aufnahme von Komponenten des Überrollschutzsystems zur Verfügung steht, insbesondere der Verriegelungseinheit 9. Es können auch mehrere Verbindungsbleche 12 vorgesehen sein.

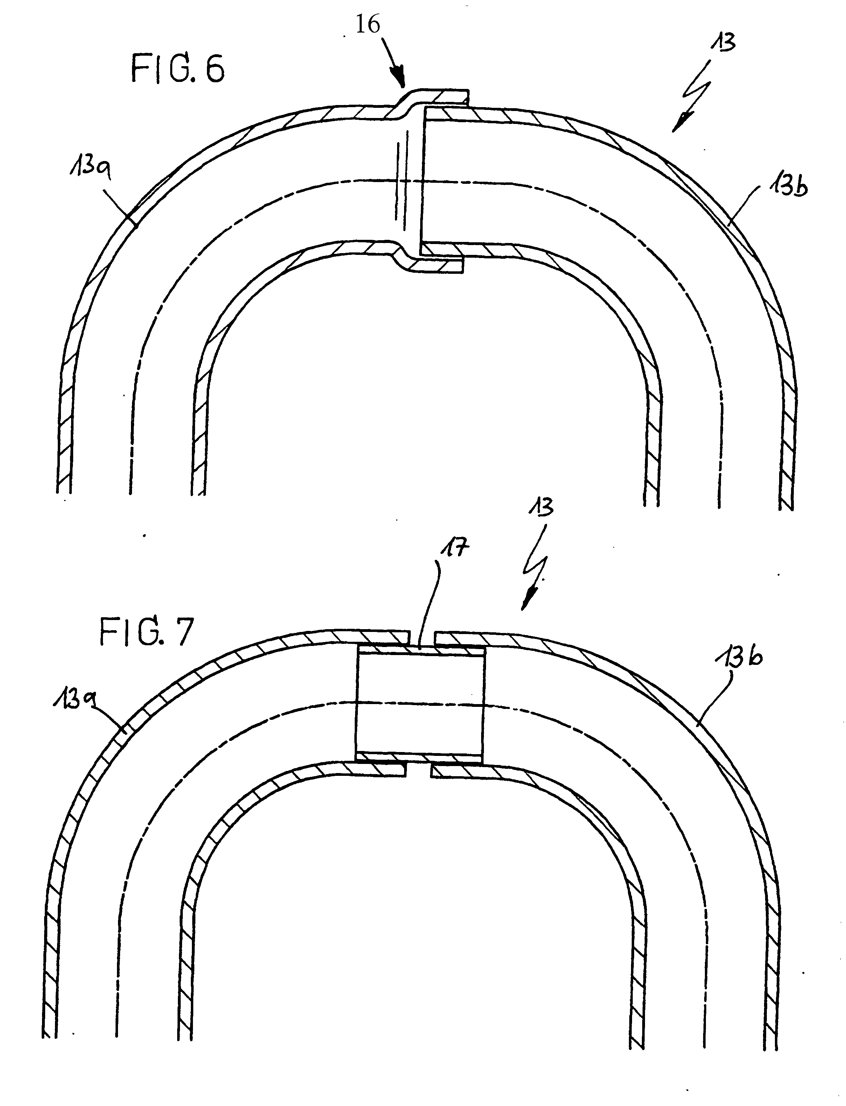

Die vorbeschriebene, erfindungsgemäße Kassettenbauweise kann sowohl für Überrollbügel mit geradliniger Bewegungsbahn, wie in den Figuren 1 bis 4 dargestellt, als auch bei einer gekrümmten Bewegungsbahn verwendet werden. Die Figur 5 zeigt in einem Längsschnitt eine derartige Bauweise mit einer gekrümmten Bewegungsbahn eines Überrollbügels. Die Stützrohre 3 haben dabei einen deutlich größeren Durchmesser als die Schenkelrohre des Überrollbügels 13 und besitzen am oberen bzw. unteren Ende jeweils einen Führungsring 14 bzw. 15, der jeweils fest im Stützrohr angebracht ist, und dessen Innendurchmesser auf den Rohrdurchmesser der Schenkel des Überrollbügels 13 abgestellt ist. Zur Anpassung an die Bahnkrümmung sind dabei die Blechschalen-Teile 1 und 2 segmentiert. Besonders bei einer gekrümmten Bewegungsbahn des Überrollbügels 13 gemäß Fig. 5 ist neben der Parallelität der Bügelschenkel auch eine minimale Verschränkung der Schenkel notwendig. Der Überrollbügel 13 wird daher gemäß den Figuren 6 und 7 vorzugsweise zweiteilig ausgeführt. Diese Zweiteilung ermöglicht einen besseren Toleranzausgleich sowie eine Verdrehung der beiden Rohrhälften 13a, 13b zueinander. Bei der Ausführung nach Fig. 6 erfolgt die Verbindung der beiden Rohrhälften über eine Muffenverbindung 16, bei der Ausführung nach Fig. 7 über ein Zwischenstück 17 in Form eines Rohrabschnittes. Durch die Zweiteilung können die beiden Rohrhälften 13a, 13b nach den entsprechenden Biegeoperationen und einer eventuell notwendigen Wärmebehandlung in der Schweißvorrichtung exakt ausgerichtet werden, wobei in der Schweißstelle bei der Ausführung nach Fig. 7 das Zwischenstück 17 die Ausrichtung und Festigkeit der beiden Bügel-Rohrhälften unterstützt.

## Patentansprüche

1. Überrollschutzsystem mit einem im Gefahrenfall ausfahrbaren U-förmigen Überrollbügel (13), der in einer fahrzeugfest angebrachten Kassette aus- und einfahrbar geführt gehaltert ist, **gekennzeichnet durch** einen Aufbau der Kassette aus zwei Blechschalen, einem großflächigen, hohen Kassettenvorderteil (1) und einem niedrigeren Kassettenschließblech (2), die beide jeweils zwei Halbschalen (1a, 2a) zur Aufnahme von Stützrohren (3) besitzen, die maßgenau entsprechend dem Abstand der beiden Schenkel des Überrollbügels (13) jeweils in den gegenüberliegenden Halbschalen (1a, 2a) des Kassettenvorderteiles (1) und des Kassettenschließbleches (2) befestigt sind.

2. Überrollschutzsystem nach Anspruch 1, **dadurch gekennzeichnet, daß** die Länge der Stützrohre (3) nach der Höhe des Kassettenschließbleches (2) bestimmt ist.

3. Überrollschutzsystem nach Anspruch 1 oder 2, **dadurch gekennzeichnet, daß** zwischen den Stützrohren (3) und den Halbschalen (1 a, 2 a) umlaufend ein Spiel ausgebildet ist, welches ermöglicht, die Stützrohre (3) beim Zusammenbau der Kassette mit minimaler Toleranz zueinander zu positionieren.

4. Überrollschutzsystem nach Anspruch 1 oder 2, 3, **dadurch gekennzeichnet, daß** sowohl das Kassettenvorderteil (1) als auch das Kassettenschließblech (2) an beiden Randseiten laschenartige Fortsätze (1b, 2b) und zwischen den Halbschalen (1a, 2a) jeweils mindestens eine aufeinander zugerichtete flächige Ausformung (1d, 2d) zur gegenseitigen flächigen Verbindung der beiden Kassetten-Blechschalen besitzen.

5. Überrollschutzsystem nach Anspruch 4, **dadurch gekennzeichnet, daß** jeweils zwei beabstandete flächige Ausformungen (1d, 2d) vorgesehen sind, zwischen denen ein freier Raum (8) für die Anordnung von Komponenten (9) des Überrollschutzsystems ausgebildet ist.

6. Überrollschutzsystem nach Anspruch 4, **dadurch gekennzeichnet, daß** jeweils nur eine flächige Ausformung (1d, 2d) vorgesehen ist und beabstandet zu dieser unter Bildung eines freien Raumes (8) dazwischen mindestens ein Verbindung-Blechteil (12) angebracht ist.

7. Überrollschutzsystem nach Anspruch 6, **dadurch gekennzeichnet, daß** das Verbindungs-Blechteil (12) ein winkelförmiges oder U-förmiges Blechteil ist.

8. Überrollschutzsystem nach einem der Ansprüche 1 bis 7, **dadurch gekennzeichnet, daß** der U-förmige Überrollbügel (13) hälftig zweigeteilt ist und die Verbindungsstelle zwischen beiden Bügelhälften (13a) so ausgebildet ist, daß beim Zusammenfügen der Bügelhälften, vorzugsweise durch Schweißen, eine gewünschte Ausrichtung der Schenkelrohre zueinander ermöglicht ist.

9. Überrollschutzsystem nach Anspruch 8, **dadurch gekennzeichnet, daß** die Verbindung beider Bügelhälften (13a) als Muffe (16) ausgebildet ist.

10. Überrollschutzsystem nach Anspruch 8, **dadurch gekennzeichnet, daß** ein die Bügelhälften verbindendes Zwischenstück in Form eines Rohrabschnittes (17) an der Verbindungsstelle vorgesehen ist.

11. Überrollschutzsystem nach einem der Ansprüche 1 bis 10, **dadurch gekennzeichnet, daß** die Bewegungsbahn des Überrollbügels (13) gradlinig oder gekrümmt ist.

12. Überrollschutzsystem nach Anspruch 11, **dadurch gekennzeichnet, daß** am Anfang und Ende der Stützrohre (3) jeweils ein Führungsring (14, 15) angebracht ist.

## Claims

1. Roll-over protection system having a U-shaped roll bar (13) which can be extended in the event of danger and which is retained in a guided state so as to be able to be extended and retracted in and out of a casing which is fitted so as to be secured to the vehicle, **characterised by** a casing construction comprising two sheet metal shells, an upper front casing portion (1) having a large surface-area and a lower casing closure sheet (2) which each have two half-shells (1a, 2a) for receiving tubular supports (3), respectively, and which are each fixed in a dimensionally precise manner in accordance with the spacing of the two members of the roll bar (13) in the opposing half-shells (1a, 2a) of the front casing portion (1) and the casing closure sheet (2).

2. Roll-over protection system according to claim 1, **characterised in that** the length of the tubular supports (3) is determined in accordance with the height of the casing closure sheet (2).

3. Roll-over protection system according to claim 1 or 2, **characterised in that** a clearance is formed in a continuous manner between the tubular supports (3) and the half-shells (1a, 2a), which clearance allows the tubular supports (3) to be positioned with minimal tolerance relative to each other when the casing is assembled.

4. Roll-over protection system according to claim 1, 2 or 3, **characterised in that** both the front casing portion (1) and the casing closure sheet (2) have, at both peripheral sides, flap-like continuations (1b, 2b) and, between the half-shells (1a, 2a), at least one planar formation (1d, 2d), which are directed towards each other for mutual planar connection of the two sheet metal shells of the casing.

5. Roll-over protection system according to claim 4, **characterised in that** there are provided in each case two spaced-apart planar formations (1d, 2d), between which a free space (8) is formed for the arrangement of components (9) of the roll-over protection system.

6. Roll-over protection system according to claim 4, **characterised in that** only one planar formation (1d, 2d) is provided in each case and at least one connecting sheet portion (12) is fitted with spacing therefrom, with a free space (8) being formed therebetween.

7. Roll-over protection system according to claim 6, **characterised in that** the connecting sheet portion (12) is an angular or U-shaped sheet portion.

8. Roll-over protection system according to any one of claims 1 to 7, **characterised in that** the U-shaped roll bar (13) is divided into two halves and the connection point between the two halves (13a) of the bar is constructed in such a manner that, when the halves of the bar are joined together, preferably by means of welding, it is possible to align the tubular members relative to each other in the desired manner.

9. Roll-over protection system according to claim 8, **characterised in that** the connection of the two halves (13a) of the bar is constructed as a sleeve (16).

10. Roll-over protection system according to claim 8, **characterised in that** an intermediate piece in the form of a tubular portion (17) is provided at the connection point and connects the halves of the bar.

11. Roll-over protection system according to any one of claims 1 to 10, **characterised in that** the movement path of the roll bar (13) is straight or curved.

12. Roll-over protection system according to claim 11, **characterised in that** a guiding ring (14, 15) is fitted at the beginning and end of the tubular supports (3), respectively.

## Revendications

1. Système de protection anti-retournement comprenant un arceau de sécurité (13) en forme de U susceptible de sortir en cas de danger, qui est maintenu en étant guidé de manière à pouvoir sortir et entrer dans un caisson monté fixé au véhicule, **caractérisé par** une structure de caisson composée de deux coques en tôle, d'une partie avant de caisson (1) élevée, à grande surface et d'une tôle de fermeture de caisson (2) plus basse, qui toutes les deux possèdent respectivement deux demi-coques (1a, 2a) de réception de tubes de support (3), qui, en fonction de la distance entre les deux branches de l'arceau de sécurité (13), conformément aux mesures*, sont respectivement fixés dans les demi-coques (1a, 2a) opposées de la partie avant de caisson (1) et de la tôle de fermeture de caisson (2),

2. Système de protection anti-retournement selon la revendication 1, **caractérisé en ce que** la longueur des tubes de support (3) est définie en fonction de la hauteur de la tôle de fermeture de caisson (2).

3. Système de protection anti-retournement selon la revendication 1 ou 2, **caractérisé en ce qu'**un jeu est ménagé de façon circulaire entre les tubes de support (3) et les demi-coques (1a, 2a), lequel jeu permet de positionner les tubes de support (3) les uns par rapport aux autres avec une tolérance minimale au montage du caisson.

4. Système de protection anti-retournement selon la revendication 1 ou 2, 3, **caractérisé en ce que** la partie avant de caisson (1) et la tôle de fermeture de caisson (2) possèdent, sur les deux côtés latéraux, des prolongements (1b, 2b) du type éclisse et entre les demi-coques (1a, 2a), respectivement au moins une formation plane (1d, 2d), mises l'une sur l'autre en vue de l'assemblage plan mutuel des deux coques en tôle de caisson.

5. Système de protection anti-retournement selon la revendication 4, **caractérisé en ce que** respectivement deux formations planes distantes (1d, 2d) sont prévues, entre lesquelles est ménagé un espace libre (8) pour disposer des composants (9) du système de protection antiretournement.

6. Système de protection anti-retournement selon la revendication 4, **caractérisé en ce que** respectivement seule une formation plane (1d, 2d) est prévue et au moins une pièce en tôle d'assemblage (12) est disposée à distance de celle-ci en formant entre elles un espace libre (8).

7. Système de protection anti-retournement selon la revendication 6, **caractérisé en ce que** la pièce en tôle d'assemblage (12) est une pièce en tôle angulaire ou en forme de U.

8. Système de protection antiretournement selon l'une quelconque des revendications 1 à 7, **caractérisé en ce que** l'arceau de sécurité en forme de U (13) est divisé en deux moitiés égales et le point d'assemblage entre les deux demi-arceaux (13a) est conçu de sorte que, lorsque les demi-arceaux sont joints, de préférence par soudage, une orientation souhaitée des tubes de branche les uns par rapport aux autres est possible.

9. Système de protection anti-retournement selon la revendication 8, **caractérisé en ce que** l'assemblage des deux demi-arceaux (13a) est conçu sous forme de manchon (16).

10. Système de protection anti-retournement selon la revendication 8, **caractérisé en ce qu'**une pièce intermédiaire sous forme d'une section de tube (17) reliant les demi-arceaux est prévue au point d'assemblage.

11. Système de protection anti-retournement selon l'une quelconque des revendications 1 à 10, **caractérisé en ce que** le trajet de déplacement de l'arceau de sécurité (13) est rectiligne ou courbe.

12. Système de protection anti-retournement selon la revendication 11, **caractérisé en ce que** respectivement une bague de guidage (14, 15) est disposée au début et à la fin des tubes de support (3).
